# EUROPEAN PATENT APPLICATION

(11) **EP 3 943 983 A1**
(43) Date of publication of application: **26.01.2022**
(21) Application number: 21183390.0
(22) Date of filing: 02.07.2021
(51) Int. Cl.: G01S 19/45, G01S 19/47, G01S 19/48, G01S 19/49

(54) **POSITIONING METHOD, DEVICE, MEDIUM AND EQUIPMENT**

(30) Priority: 03.07.2020 CN 202010635277
(71) Applicant: Beijing Tusen Weilai Technology Co., Ltd., Beijing (CN)
(72) Inventor: XU, Yong, Beijing (CN); WU, Nan, Beijing (CN)
(74) Representative: Murgitroyd & Company

(57) **Abstract**

The present disclosure relates to a method, apparatus, medium, and device for positioning. When a predetermined switching condition is satisfied, a positioning result obtained by using a different positioning algorithm based on positioning data collected by a further selected sensor to position a movable object can be used as the positioning result of the movable object. When a autonomous driving vehicle leaves an area with high satellite signal quality and enters an area with low satellite signal quality, a positioning result of the vehicle obtained based on positioning data collected by a further selected sensor, which is different from a GPS receiver, can be used as the positioning result of the vehicle. In this way, when positioning the vehicle, the GPS positioning data with low positioning accuracy can be directly discarded, thereby effectively improving the accuracy of vehicle positioning.

## Description

### TECHNICAL FIELD

The present disclosure relates to positioning technology, and more particularly, to a method, an apparatus, a medium, and a device for positioning.

### BACKGROUND

This section is intended to provide a background or context for the embodiments of the present disclosure as set forth in the claims. The description here is not admitted to be prior art by mere inclusion in this section.

In the process of autonomous driving of a vehicle, in order to implement autonomous driving of the vehicle, the vehicle needs to be positioned. Due to the high positioning accuracy of Global Positioning System (GPS), the GPS positioning technology is typically used to position the vehicle. Further, based on the GPS positioning technology, in combination with other sensor positioning technologies, vehicle positioning can be implemented by using fusion positioning algorithms, so as to further improve the accuracy of vehicle positioning. Currently, the vehicle positioning can typically be implemented in areas with high satellite signal quality.

When a vehicle leaves an area with high satellite signal quality and enters an area with low satellite signal quality in a process of autonomous driving, the accuracy of GPS positioning may be greatly reduced and thus positioning algorithms that can achieve vehicle positioning accurately in the area with the high satellite signal quality may not be applied to the area with the low satellite signal quality. As a result, the accuracy of vehicle positioning may be significantly degraded, and the accuracy of vehicle positioning cannot be guaranteed.

### SUMMARY

The embodiments of the present disclosure provide a method, apparatus, medium, and device for positioning, capable of solving the problem that, when an autonomous vehicle leaves an area with high satellite signal quality and enters an area with low satellite signal quality, the accuracy of vehicle positioning may be relatively low in the area with the low satellite signal quality.

In a first aspect, a positioning method is provided according to the present disclosure. The method includes: positioning a movable object by using a first positioning algorithm based on positioning data collected by at least one first sensor to obtain a first positioning result; positioning the movable object by using a second positioning algorithm based on positioning data collected by at least one second sensor to obtain a second positioning result; determining, while using one of the first positioning result and the second positioning result as a determined positioning result, whether a current condition of the movable object satisfies a predetermined switching condition; and using the other one of the first positioning result and the second positioning result as the determined positioning result when determining that the current condition of the movable object satisfies the predetermined switching condition.

In a second aspect, a positioning apparatus is provided according to the present disclosure. The positioning apparatus includes a first positioning module, a second positioning module, a determining module, and a positioning result determining module. The first positioning module is configured to positioning a movable object by using a first positioning algorithm based on positioning data collected by at least one first sensor to obtain a first positioning result. The second positioning module is configured to position the movable object by using a second positioning algorithm based on positioning data collected by at least one second sensor to obtain a second positioning result. The determining module is configured to determine, while using one of the first positioning result and the second positioning result as a determined positioning result, whether a current condition of the movable object satisfies a predetermined switching condition. The positioning result determining module is configured to use the other one of the first positioning result and the second positioning result as the determined positioning result when the determining module determines that the current condition of the movable object satisfies the predetermined switching condition.

In a third aspect, a non-volatile computer storage medium is provided. The non-volatile computer storage medium stores an executable program which, when executed by a processor, implements the above method.

In a fourth aspect, a positioning device is provided. The positioning device includes a processor, a communication interface, a memory, and a communication bus. The processor, the communication interface, and the memory communicate with each other via the communication bus. The memory is configured to store a computer program. Thee processor is configured to implement, when executing the program stored on the memory, the above method.

With the solutions according to the embodiments of the present disclosure, when a first positioning result (a second position result) is used as a positioning result of a movable object, it is determined whether a predetermined switching condition is satisfied. When the predetermined switching condition is satisfied, the second positioning result (the first position result) can be used as the positioning result of the movable object. That is, when the predetermined switching condition is satisfied, the positioning result obtained by using the different positioning algorithm based on the positioning data collected by the further selected sensor to position the movable object can be used as the positioning result of the movable object. In this way, when a driving scenario changes, for the scenario after the change, the vehicle can be positioned based on the positioning data that is collected by the further selected sensor and has higher positioning accuracy. Accordingly, the positioning data with low positioning accuracy can be directly discarded, thereby effectively improving the accuracy of positioning.

If the solution of the present disclosure is applied in an autonomous driving process, when a vehicle leaves an area with high satellite signal quality and enters an area with low satellite signal quality, in the area with the low satellite signal quality, a positioning result of the vehicle obtained based on positioning data collected by a further selected sensor, which is different from a GPS receiver, can be used as the positioning result of the vehicle, while a positioning result of the vehicle obtained based on positioning data collected by a sensor including a GPS receiver is no longer used as the positioning result of the vehicle. In this way, when positioning the vehicle, the GPS positioning data with low positioning accuracy can be directly discarded, thereby effectively improving the accuracy of vehicle positioning.

Additional features and advantages of the present disclosure will be set forth in the following description, or become apparent at least in part from the following description, or can be learned from practicing of the present disclosure. The objects and other advantages of the present disclosure can be achieved and obtained from structures specifically described in the description, claims, and drawings.

### BRIEF DESCRIPTION OF THE DRAWINGS

In order to describe the technical solutions according to the embodiments of the present disclosure or the prior art more clearly, figures used in description of the embodiments or the prior art will be introduced briefly below. Obviously, the figures described below only illustrate some embodiments of the present disclosure, and other figures can be obtained by those of ordinary skill in the art based on these drawings without any inventive efforts.
Fig. 1 is a schematic diagram showing a principle of a fusion positioning algorithm according to a related art;
Fig. 2 is a flowchart illustrating a positioning method according to an embodiment of the present disclosure;
Fig. 3 is a flowchart illustrating a positioning method according to an embodiment of the present disclosure;
Fig. 4 is a schematic diagram showing a positional relationship according to an embodiment of the present disclosure;
Fig. 5 is a flowchart illustrating a positioning method according to an embodiment of the present disclosure;
Fig. 6 is a schematic diagram showing a fusion process of a first positioning algorithm according to an embodiment of the present disclosure;
Fig. 7 is a schematic diagram showing a fusion process of a second positioning algorithm according to an embodiment of the present disclosure;
Fig. 8 is a schematic diagram showing a structure of a positioning apparatus according to an embodiment of the present disclosure; and
Fig. 9 is a schematic diagram showing a structure of a positioning device according to an embodiment of the present disclosure.

### DETAILED DESCRIPTION OF THE EMBODIMENTS

In the following, the present disclosure will be described in further detail with reference to the figures, such that the objects, solutions, and advantages of the present disclosure will become more apparent. Obviously, the embodiments described below are only some, rather than all, of the embodiments of the present disclosure. Starting from the embodiments of the present disclosure, those skilled in the art can obtain other embodiments without applying any inventive skills and all these embodiments are to be encompassed by the scope of the present disclosure.

It is to be noted that the phrase "a plurality of' or "a number of' as used herein means two or more. The term "and/or" as used herein only represents a relationship between correlated objects, including three possibilities. For example, "A and/or B" means A only, B only, or both A and B. In addition, the symbol "/" as used herein represents an "or" relationship between the correlated objects preceding and succeeding the symbol.

It is to be noted that the terms "first" and "second" in the description and claims of the present disclosure and the above-mentioned figures are used to distinguish similar objects from each other, and are not necessarily used to describe a specific sequence or order. It should be understood that the data used in this way can be interchanged as appropriate such that the embodiments of the present disclosure can be implemented in orders other than those shown or described herein.

In addition, the terms "comprising" and "having" and any variants thereof are intended to cover non-exclusive inclusions. For example, a process, method, system, product or device that includes a series of steps or units is not necessarily limited to those steps or units that are explicitly listed, and may include other steps or units that are not explicitly listed or are inherent to the process, method, product, or device.

In some embodiments of the present disclosure, a movable object may refer to a "vehicle", and the term "vehicle" is to be broadly interpreted as including any moving objects, including for example aircraft, ships, spacecrafts, cars, trucks, vans, semi-trailers, motorcycles, golf carts, off-road vehicles, warehouse transport vehicles, agricultural vehicles, and vehicles running on tracks, such as trams or trains and other rail vehicles. A "vehicle" as used in the present disclosure may typically include: a power system, a sensor system, a control system, peripheral devices and a computer system. In other embodiments, a vehicle may include more, fewer, or different systems.

Here, the power system is a system that supplies power to the vehicle, including: an engine/motor, a transmission, wheels/tyres, and a power source unit.

The control system may include a combination of devices that control the vehicle and its components, such as a steering unit, a throttle, and a brake unit.

The peripheral devices may be devices that allow the vehicle to interact with external sensors, other vehicles, external computing devices, and/or users, including e.g., a wireless communication system, a touch screen, a microphone, and/or a speaker.

Based on the vehicle described above, an autonomous vehicle can be further provided with a sensor system and an autonomous driving control device.

The sensor system may include a plurality of sensors for sensing information on an environment in which the vehicle is located, and one or more actuators that change respective positions and/or directions of the sensors. The sensor system may include any combination of sensors such as a Global Positioning System (GPS) sensor, an Inertial Measurement Unit (IMU), a Radio Detection and Ranging (RADAR) unit, a camera, a laser rangefinder, a Light Detection and Ranging (LIDAR) unit, and/or an acoustic sensor. The sensor system may further include sensors that monitor the vehicle's internal systems (such as an O₂ monitor, a fuel gauge, an engine thermometer, etc.).

The autonomous driving control device may include a processor and a memory having at least one machine executable instruction stored therein. The processor executes the at least one machine executable instruction to provide functions including e.g., a map engine, a positioning module, a perception module, a navigation or route module, and an autonomous control module. The map engine and the positioning module are configured to provide map information and positioning information. The perception module is configured to perceive objects in the environment around the vehicle based on information obtained by the sensor system and the map information provided by the map engine. The navigation or route module is configured to plan a driving route for the vehicle based on processing results from the map engine, the positioning module and the perception module. The autonomous control module is configured to convert decision information inputted from the modules such as the navigation or route module into a control command for outputting to a vehicle control system, and transmit the control command to respective components in the vehicle control system over an in-vehicle network (for example, an in-vehicle electronic network system implemented using a CAN bus, a local interconnection network, a multimedia directional system transmission, etc.) for autonomous control of the vehicle. The autonomous control module can also obtain information on respective components in the vehicle via the in-vehicle network.

Currently, in areas with high satellite signal quality, GPS positioning technology can be used solely to position autonomous vehicles. In this case, if a vehicle leaves an area with high satellite signal quality and enters an area with low satellite signal quality, the accuracy of positioning data collected by a GPS receiver will be greatly reduced, and the accuracy of vehicle positioning will be significantly degraded. Even worse, the GPS receiver may not be able to collect positioning data, and may not be able to position the vehicle.

Of course, in areas with high satellite signal quality, it is also possible to position autonomous vehicles based on GPS positioning technology by using fusion positioning algorithms. A positioning result of a vehicle as obtained based on positioning data collected by a GPS receiver and a positioning result of the vehicle as obtained based on positioning data collected by at least one other sensor can be filtered using a pre-designed positioning fusion filter, to obtain a fusion positioning result, which is used as the positioning result of the vehicle.

Using positioning data collected by a GPS receiver to obtain a positioning result of a vehicle can be understood as calculating latitude and longitude coordinates of the vehicle where the GPS receiver is located based on satellite signals received by the GPS receiver.

Using positioning data collected by an inertial navigation sensor (e.g., including a gyroscope and an accelerometer) to obtain a positioning result of a vehicle can be understood as establishing a positioning coordinate system based on data collected by the gyroscope, and calculating a position of the vehicle where the inertial navigation sensor is located in the positioning coordinate system based on data collected by the accelerometer.

Using positioning data collected by a vision sensor (e.g., a camera) to obtain a positioning result of a vehicle can be understood as determining information on surrounding environment of the vehicle based on an image of the surrounding environment of the vehicle collected by the camera, and matching the determined information on the surrounding environment of the vehicle with a pre-loaded on-vehicle map, to obtain positioning information corresponding to the vehicle where the camera is located.

Using positioning data collected by a laser sensor to obtain a positioning result of a vehicle can be understood as matching information on surrounding environment of the vehicle as determined by means of ranging using the laser sensor with a pre-loaded on-vehicle map, to obtain positioning information corresponding to the vehicle where the laser sensor is located.

In an example where the four types of sensors, i.e., the GPS receiver, the inertial navigation sensor, the vision sensor, and the laser sensor, are used to position a vehicle using a fusion positioning algorithm, four positioning results of the vehicle can be obtained based on the four types of sensors, i.e., the GPS receiver, the inertial navigation sensor, the vision sensor, and the laser sensor, and then be filtered using a pre-designed positioning fusion filter to obtain a fusion positioning result.

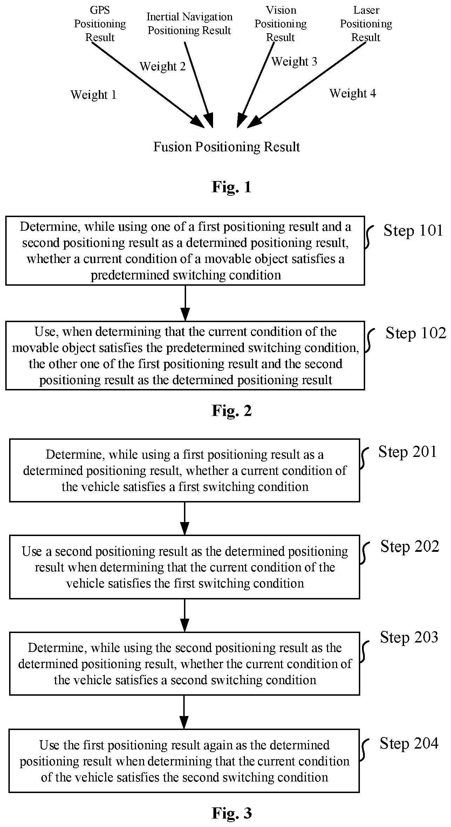

When obtaining the fusion positioning result, since different sensors have different positioning accuracy, a larger fusion weight can be assigned to a sensor having higher positioning accuracy, and a smaller fusion weight can be assigned to a sensor having lower positioning accuracy. Accordingly, the positioning results can be weighted with their respective weights to obtain a comprehensively weighted average fusion positioning result (the positioning result obtained based on the positioning data collected by the GPS receiver ("GPS" for short) can be denoted as a GPS positioning result, the positioning result obtained based on the positioning data collected by the inertial navigation sensor ("inertial navigation" for short) can be denoted as an inertial navigation positioning result, the positioning result obtained based on the positioning data collected by the vision sensor ("vision" for short) can be denoted as a vision positioning result, and the positioning result obtained based on the positioning data collected by the laser sensor ("laser" for short) can be denoted as a laser positioning result, and the fusion weights corresponding to the four positioning results can be denoted as Weights 1-4, respectively). The schematic diagram of the principle of the fusion positioning algorithm is shown in Fig. 1.

In this case, if a vehicle leaves an area with high satellite signal quality and enters an area with low satellite signal quality, as the accuracy of GPS positioning is greatly reduced and the GPS positioning result will be used in the process of determining the fusion positioning result, the accuracy of the fusion positioning result will also be greatly reduced, and thus the accuracy of vehicle positioning cannot be guaranteed.

In order to solve the problem of low positioning accuracy of autonomous vehicles in the above two cases, an embodiment of the present disclosure provides a positioning method, which can be, but not limited to be, applied to a process where an autonomous vehicle leaves an area with high satellite signal quality and enters an area with low satellite signal quality. For example, it can also be applied to any process of vehicle positioning scenario switching. As shown in Fig. 2, the method may include the following steps.

At step 101, while using one of a first positioning result and a second positioning result as a determined positioning result, it is determined whether a current condition of a movable object satisfies a predetermined switching condition.

Here, the determined positioning result can be understood as a final positioning result to be used by the movable object. The determined positioning result can also be defined as a target positioning result. The step 101 can be also defined as: selecting one of the first positioning result and the second positioning result as a target positioning result.

Here, the first positioning result is obtained by positioning the movable object using a first positioning algorithm based on positioning data collected by at least one first sensor. That is, in this embodiment, the movable object can be positioned by using the first positioning algorithm based on the positioning data collected by the at least one first sensor to obtain the first positioning result. The second positioning result is obtained by positioning the movable object using a second positioning algorithm based on positioning data collected by at least one second sensor. That is, in this embodiment, the movable object can be positioned by using the second positioning algorithm based on the positioning data collected by the at least one second sensor to obtain the second positioning result.

At step 102, when determining that the current condition of the movable object satisfies the predetermined switching condition, the other one of the first positioning result and the second positioning result is used as the determined positioning result. The step 102 can be also defined as: selecting another one of the first positioning result and the second positioning result as the target positioning result when determine that the current condition of the movable object satisfies the predetermined switching condition.

That is, while using the first positioning result as the determined positioning result (i.e., while the first positioning result is selected as the target positioning result), when it is determined that the current condition of the movable object satisfies the predetermined switching condition, the second positioning result may be used as the determined positioning result.

While using the second positioning result as the determined positioning result (i.e., while the second positioning result is selected as the target positioning result), when it is determined that the current condition of the movable object satisfies the predetermined switching condition, the first positioning result may be used as the determined positioning result.

In a possible implementation, the at least one first sensor may include at least one of a satellite positioning system receiver and an inertial navigation sensor, the at least one second sensor may include no satellite positioning system receiver, the at least one second sensor may have at least one different sensor from the at least one first sensor, and the at least one second sensor may include at least one of a vision sensor, a laser sensor, and an inertial navigation sensor.

In this case, the operation of positioning the movable object by using the first positioning algorithm based on the positioning data collected by the at least one first sensor to obtain the first positioning result may include: positioning the movable object based on a satellite signal collected by the satellite positioning system receiver to obtain a satellite positioning result; positioning the movable object based on acceleration data collected by the inertial navigation sensor to obtain an inertial navigation positioning result; and performing weighted filtering and fusion on the satellite positioning result and the inertial navigation positioning result to generate the first positioning result.

The operation of positioning the movable object by using the second positioning algorithm based on the positioning data collected by the at least one second sensor to obtain the second positioning result may include: positioning the movable object based on image data collected by the vision sensor to obtain a vision positioning result; positioning the movable object based on point cloud data collected by the laser sensor to obtain a laser positioning result; positioning the movable object based on acceleration data collected by the inertial navigation sensor to obtain an inertial navigation positioning result; and performing weighted filtering and fusion on the inertial navigation positioning result, the vision positioning result, and the laser positioning result to generate the second positioning result.

In a possible implementation, the predetermined switching condition may include a first switching condition, and the first switching condition may be a combination of one or more of: satellite signal quality obtained by the movable object being lower than a specified value, and the movable object arriving at a specified position on a pre-loaded map.

In this case, the operation of determining, while using the one of the first positioning result and the second positioning result as the determined positioning result, whether the current condition of the movable object satisfies the predetermined switching condition may include: determining, while using the first positioning result as the determined positioning result (i.e., while the first positioning result is selected as the target positioning result), whether the current condition of the movable object satisfies the first switching condition.

The operation of using (also defined as selecting) the other one of the first positioning result and the second positioning result as the determined (also defined as target) positioning result when determining that the current condition of the movable object satisfies the predetermined switching condition may include: using the second positioning result as the determined positioning result when determining that the current condition of the movable object satisfies the first switching condition.

Further, in a possible implementation, the operation of using the second positioning result as the determined positioning result when determining that the current condition of the movable object satisfies the first switching condition may include: determining, when determining that the current condition of the movable object satisfies the first switching condition, whether a first positioning error corresponding to the second positioning result converges or not; and using the second positioning result as the determined positioning result when determining that the first positioning error converges.

Furthermore, in a possible implementation, the operation of determining, when determining that the current condition of the movable object satisfies the first switching condition, whether the first positioning error converges or not may include: determining, when determining that the current condition of the movable object satisfies the first switching condition, whether the first positioning error converges or not at a current time point; or determining, when determining that the current condition of the movable object satisfies the first switching condition, whether the first positioning error converges or not within a defined time length.

In another possible implementation, the predetermined switching condition may include a second switching condition, and the second switching condition may be a combination of one or more of: satellite signal quality obtained by the movable object being higher than a defined value, and the movable object arriving at a defined position on a pre-loaded map.

In this case, the operation of determining, while using the one of the first positioning result and the second positioning result as the determined positioning result, whether the current condition of the movable object satisfies the predetermined switching condition may include: determining, while using the second positioning result as the determined positioning result, whether the current condition of the movable object satisfies the second switching condition.

The operation of using the other one of the first positioning result and the second positioning result as the determined positioning result when determining that the current condition of the movable object satisfies the predetermined switching condition may include: using the first positioning result as the determined positioning result when determining that the current condition of the movable object satisfies the second switching condition.

Further, in a possible implementation, the operation of using the first positioning result as the determined positioning result when determining that the current condition of the movable object satisfies the second switching condition may include: determining, when determining that the current condition of the movable object satisfies the second switching condition, whether a second positioning error corresponding to the first positioning result converges or not; and using the first positioning result as the determined positioning result when determining that the second positioning error converges.

Furthermore, in a possible implementation, the operation of determining, when determining that the current condition of the movable object satisfies the second switching condition, whether the second positioning error converges or not may include: determining, when determining that the current condition of the movable object satisfies the second switching condition, whether the second positioning error converges or not at a current time point; or determining, when determining that the current condition of the movable object satisfies the second switching condition, whether the second positioning error converges or not within a defined time length.

In order to make the solution described in this embodiment more apparent to those skilled in the art, in the following, the above embodiment will be further described with reference to an example where the movable object is a vehicle. This embodiment provides a positioning method. The flow of the method is shown in Fig. 3, including the following steps.

At step 201, while using a first positioning result as a determined positioning result, it is determined whether a current condition of the vehicle satisfies a first switching condition.

Here, the first positioning result is obtained by positioning the vehicle using a first positioning algorithm based on positioning data collected by at least one first sensor.

The first switching condition may be any switching condition set as desired. The determination as to whether the current condition of the vehicle satisfies the first switching condition can be understood as determining whether to switch from a current scenario to a specified scenario for vehicle positioning.

When it is determined that the current condition of the vehicle satisfies the first switching condition, the method proceeds with step 202.

At step 202, when it is determined that the current condition of the vehicle satisfies the first switching condition, a second positioning result is used as the determined positioning result.

Here, the second positioning result is obtained by positioning the vehicle using a second positioning algorithm based on positioning data collected by at least one second sensor.

This step can be understood as, in case of switching from the current scenario to the specified scenario, switching from using the first positioning result as the vehicle positioning result to using the second positioning result as the vehicle positioning result for the specified scenario.

For example, in an area with high satellite signal quality, the first positioning result may be obtained by positioning the vehicle e.g., using the first positioning algorithm based on the positioning data collected by the at least one first sensor including a GPS receiver. In case of switching to an area with low satellite signal quality, due to low accuracy of the positioning data collected by the GPS receiver, the positioning data collected by the at least one second sensor including no GPS receiver can be used. The second positioning result obtained by positioning the vehicle using the second positioning algorithm is used as the positioning result of the vehicle to ensure the accuracy of the vehicle positioning.

In this case, the first switching condition can be set to a combination of one or more of: CD satellite signal quality obtained by the vehicle being lower than a specified value, and ② the vehicle arriving at a specified position on a pre-loaded map. The first switching condition is used to determine whether the vehicle enters an area with low satellite signal quality.

Further, in an area with high satellite signal quality, in addition to using the GPS positioning system for vehicle positioning, other satellite positioning systems can also be used for positioning the vehicle. That is, in the area with high satellite signal quality, the first positioning result can be obtained by positioning the vehicle using the first positioning algorithm based on the positioning data collected by at least one first sensor including a satellite positioning system receiver. In case of switching to an area with low satellite signal quality, due to low accuracy of the positioning data collected by the satellite positioning system receiver, the second positioning result obtained by positioning the vehicle using the second positioning algorithm based on the positioning data collected by at least one second sensor including no satellite positioning system receiver can be used as the positioning result of the vehicle to guarantee the accuracy of positioning of the vehicle.

It is to be noted that the positioning principles of other satellite positioning systems (for example, Beidou satellite positioning system) are similar to those of the GPS positioning system. The process of obtaining the positioning result of the vehicle using the positioning data collected by other satellite positioning system receivers, such as a Beidou satellite positioning system receiver, is similar to the process of obtaining the positioning result of the vehicle using the positioning data collected by the GPS receiver, and details thereof will be omitted here.

Further, in a possible implementation, the at least one first sensor may include a satellite positioning system receiver and an inertial navigation sensor, to ensure the accuracy of vehicle positioning in areas with high satellite signal quality. The at least one second sensor may include a vision sensor, a laser sensor, and an inertial navigation sensor, to ensure the accuracy of vehicle positioning in areas with low satellite signal quality.

In this case, the first positioning result can be understood as a fusion positioning result obtained by performing weighted filtering on a satellite positioning result and an inertial navigation positioning result.

The second positioning result can be understood as a fusion positioning result obtained by performing weighted filtering on an inertial navigation positioning result, a vision positioning result, and a laser positioning result.

Here, the satellite positioning result is obtained by positioning the vehicle based on a satellite signal collected by the satellite positioning system receiver. The inertial navigation positioning result is obtained by positioning the vehicle based on acceleration data collected by the inertial navigation sensor. The vision positioning result is obtained by positioning the vehicle based on image data collected by the vision sensor. The laser positioning result is obtained by positioning the vehicle based on point cloud data collected by the laser sensor.

It is to be noted that in this embodiment, the first switching condition can be set based on a map. That is, a specified position can be set on the map in advance, and the map with the set specified position can be pre-loaded. Thus, it can be determined whether the first switching condition is satisfied based on the map.

In a possible implementation, the map may be a high-precision GPS map. That is, it can be determined whether the vehicle arrives at the specified position set on the map based on the GPS positioning result.

It is also to be noted that, in order to further guarantee the accuracy of positioning, in an implementation, the step 202 may include: determining, when determining that the current condition of the vehicle satisfies the first switching condition, whether a first positioning error corresponding to the second positioning result converges or not; and using the second positioning result as the determined positioning result when determining that the first positioning error converges.

That is, when it is determined that the current condition of the vehicle satisfies the first switching condition, it can be further determined whether the first positioning error converges or not, and the second positioning result is used as the determined positioning result only when it is determined that the first positioning error converges. Therefore, it can be determined whether the second positioning result is accurate further based on whether the first positioning error converges or not. Only when the second positioning result is determined to be accurate, the second positioning result is used as the determined positioning result to further ensure the accuracy of the positioning result.

The first positioning error corresponding to the second positioning result may be determined using any scheme, and whether the first positioning error converges or not may also be determined using any scheme.

In a possible implementation, when it is determined that the current condition of the vehicle satisfies the first switching condition, it can be determined whether the first positioning error converges or not within a defined time length. When it is determined that the first positioning error converges, the second positioning result is used as the determined positioning result.

That is, the first positioning error obtained each time can be determined by using a statistical method based on second positioning results that have been obtained. For example, when determining the first positioning error corresponding to the second positioning result is obtained last time, the second positioning results that have been obtained may be fitted to a normal distribution, and the standard deviation of the normal distribution may be used as the first positioning error. If the second positioning result is obtained from the time at which it is determined that the current condition of the vehicle satisfies the first switching condition, it will take a period of time to obtain an accurate first positioning error.

In order to obtain the first positioning error accurately to determine whether the second positioning result can be used to accurately position the vehicle, it can be determined whether the first positioning error converges or not within a defined time length from the time at which the current condition of the vehicle is determined to satisfy the first switching condition. Any scheme can be used to determine whether the first positioning error converges or not, e.g., by determining whether the first positioning error obtained last time is smaller than a first specified error, or by determining whether an average of the first positioning errors obtained in a specified time period is smaller than a second specified error. Only when the first positioning error converges within the defined time length, the second positioning result is used as the positioning result of the vehicle. Otherwise, the second positioning result may be considered to have a large error and cannot be used as the positioning result of the vehicle. The reason for the large error in the second positioning result can be checked, and the process can be terminated. This can further guarantee the accuracy of vehicle positioning.

In another possible implementation, when it is determined that the current condition of the vehicle satisfies the first switching condition, it can be determined whether the first positioning error converges or not at a current time point. When it is determined that the first positioning error converges, the second positioning result is used as the determined positioning result.

That is, the second positioning result may also be obtained before it is determined that the current condition of the vehicle satisfies the first switching condition. For example, when the first positioning result is obtained, the second positioning result can also be obtained, but only the first positioning result is used as the positioning result of the vehicle, while the obtained second positioning result is not admitted. Then, when it is determined that the current condition of the vehicle satisfies the first switching condition, the first positioning error may have already been obtained accurately. Therefore, when it is determined that the current condition of the vehicle satisfies the first switching condition, it can be directly determined whether the first positioning error converges or not at the current time point.

Further, this embodiment may further include the following steps.

At step 203, while using the second positioning result as the determined positioning result, it is determined whether the current condition of the vehicle satisfies a second switching condition.

Here, the second switching condition may be any switching condition set as desired. The determination as to whether the current condition of the vehicle satisfies the second switching condition can be understood as determining whether to switch from a current scenario to a specified scenario for vehicle positioning.

When it is determined that the current condition of the vehicle satisfies the second switching condition, the method proceeds with step 204.

At step 204, when it is determined that the current condition of the vehicle satisfies the second switching condition, the first positioning result is again used as the determined positioning result.

That is, in this embodiment, it is also possible to switch back to the previous positioning algorithm to continue positioning the vehicle.

Again, in the example given in the step 202, it can be understood that if the autonomous vehicle leaves the area with the low satellite signal quality and re-enters the area with the high satellite signal quality, due to the high accuracy of the positioning data collected by the GPS receiver (which can also be understood as other satellite positioning system receivers) in the area with the high satellite signal quality, it is possible to switch back to the previous positioning algorithm to ensure the accuracy of vehicle positioning.

In this case, the second switching condition can be set to a combination of one or more of: CD satellite signal quality obtained by the vehicle being higher than a defined value, and ② the vehicle arriving at a defined position on a pre-loaded map. The second switching condition is used to determine whether the vehicle enters an area with high satellite signal quality.

It is to be noted that, in order to further guarantee the accuracy of positioning, in an implementation, the step 204 may include: determining, when determining that the current condition of the vehicle satisfies the second switching condition, whether a second positioning error corresponding to the first positioning result converges or not; and using the first positioning result as the determined positioning result when determining that the second positioning error converges.

That is, when it is determined that the current condition of the vehicle satisfies the second switching condition, it can be further determined whether the second positioning error converges or not, and the first positioning result is again used as the determined positioning result only when it is determined that the second positioning error converges. Therefore, it can be determined whether the first positioning result is accurate further based on whether the second positioning error converges or not. Only when the first positioning result is determined to be accurate, the first positioning result is used as the determined positioning result to further ensure the accuracy of the positioning result.

The second positioning error corresponding to the first positioning result may be determined using any scheme, and whether the second positioning error converges or not may also be determined using any scheme.

In a possible implementation, when it is determined that the current condition of the vehicle satisfies the second switching condition, it can be determined whether the second positioning error converges or not within a defined time length. When it is determined that the second positioning error converges, the first positioning result is used as the determined positioning result.

That is, the second positioning error obtained each time can be determined by using a statistical method based on first positioning results that have been obtained. For example, when determining the second positioning error corresponding to the first positioning result is obtained last time, the first positioning results that have been obtained may be fitted to a normal distribution, and the standard deviation of the normal distribution may be used as the second positioning error. If the first positioning result is be obtained from the time at which it is determined that the current condition of the vehicle satisfies the second switching condition, it will take a period of time to obtain an accurate second positioning error.

In order to obtain the second positioning error accurately to determine whether the first positioning result can be used to accurately position the vehicle, it can be determined whether the second positioning error converges or not within a defined time length from the time at which the current condition of the vehicle is determined to satisfy the second switching condition. Any scheme can be used to determine whether the second positioning error converges or not, e.g., by determining whether the second positioning error obtained last time is smaller than a first specified error, or by determining whether an average of the second positioning errors obtained in a specified time period is smaller than a second specified error. Only when the second positioning error converges within the defined time length, the first positioning result is again used as the positioning result of the vehicle. Otherwise, the first positioning result may be considered to have a large error and cannot be used as the positioning result of the vehicle. The reason for the large error in the first positioning result can be checked, and the process can be terminated. This can further guarantee the accuracy of vehicle positioning.

In another possible implementation, when it is determined that the current condition of the vehicle satisfies the second switching condition, it can be determined whether the second positioning error converges or not at a current time point. When it is determined that the second positioning error converges, the first positioning result is the determined positioning result.

That is, the first positioning result may also be obtained before it is determined that the current condition of the vehicle satisfies the second switching condition. For example, when the second positioning result is obtained, the first positioning result can also be obtained, but only the second positioning result is used as the positioning result of the vehicle, while the obtained first positioning result is not admitted. Then, when it is determined that the current condition of the vehicle satisfies the second switching condition, the second positioning error may have already been obtained accurately. Therefore, when it is determined that the current condition of the vehicle satisfies the second switching condition, it can be directly determined whether the second positioning error converges or not at the current time point.

In the embodiments of the present disclosure, the area with the low satellite signal quality can be understood as, but not limited to, a tunnel (especially a long tunnel), an urban canyon (an urban environment similar to a natural canyon), or an indoor parking facility.

The method according to the above embodiment will be further explained with reference to an example where, in a defined range for autonomous driving of a vehicle, an area with low satellite signal quality is a tunnel and areas other than the tunnel are areas with high satellite signal quality.

It is assumed that the vehicle initially performs autonomous driving in an area with high satellite signal quality. In order to guarantee the accuracy of vehicle positioning, it can be assumed that, in the area with the high satellite signal quality, a first positioning result obtained by positioning the vehicle using a first positioning algorithm based on positioning data collected by a GPS receiver and an inertial navigation sensor is used as a determined positioning result. It can also be assumed that, in an area with low satellite signal quality, a second positioning result obtained by positioning the vehicle using a second positioning algorithm based on positioning data collected by an inertial navigation sensor, a vision sensor, and a laser sensor is used as the determined positioning result.

Since positioning the vehicle by using the first positioning algorithm based on the positioning data collected by the GPS receiver and the inertial navigation sensor occupies a relatively small amount of resources, while using the second positioning result as the determined positioning result, it is possible to continuously position the vehicle by using the first positioning algorithm, but the result of positioning the vehicle by using the first positioning algorithm is not admitted.

In this way, when it is required to use the first positioning result as the determined positioning result again, it is possible to avoid the problem that, due to a slow start of GPS positioning, after the first positioning algorithm is restarted, it will take a long time to obtain an accurate second positioning error, which would result in a delay in determining whether the second positioning error satisfies a requirement.

Of course, in a possible implementation, while using the first positioning result as the determined positioning result, the vehicle can be positioned by using the second positioning algorithm at the same time, such that when it is required to switch to the second positioning algorithm, an accurate first positioning error can be directly obtained, and a determination as to whether the first positioning error satisfies a requirement can be made quickly.

However, since positioning the vehicle by using the second positioning algorithm based on the positioning data collected by the inertial navigation sensor, the vision sensor, and laser sensors occupies a relatively large amount of system resources, and the positioning using the inertial navigation sensor, the vision sensor, and the laser sensor starts faster, after the second positioning algorithm is started, an accurate first positioning error can be obtained in a short time. Therefore, while using the first positioning result as the determined positioning result, the second positioning algorithm may not be used for the vehicle positioning.

Further, it can be assumed that the specified position and the defined position are predetermined on a high-precision GPS map, the vehicle arriving at the specified position is used as the first switching condition, and the vehicle arriving at the defined position is used as the second switching condition.

It is to be noted that the specified position can be set to a position before an entrance of the tunnel. By setting the specified position in this way, it can be ensured that after the second positioning algorithm is started, within a defined time length required to obtain an accurate first positioning error, an accurate positioning result can still be obtained based on the first positioning algorithm, thereby ensuring the continuity of accurate positioning of the vehicle.

The defined position can be set to a position after an exit of the tunnel. By setting the defined position in this way, it can be ensured that the vehicle completely leaves the tunnel and enters the area with high satellite signal quality, and accordingly the quality of the obtained satellite signal is relatively high and the accuracy of the first positioning result is higher.

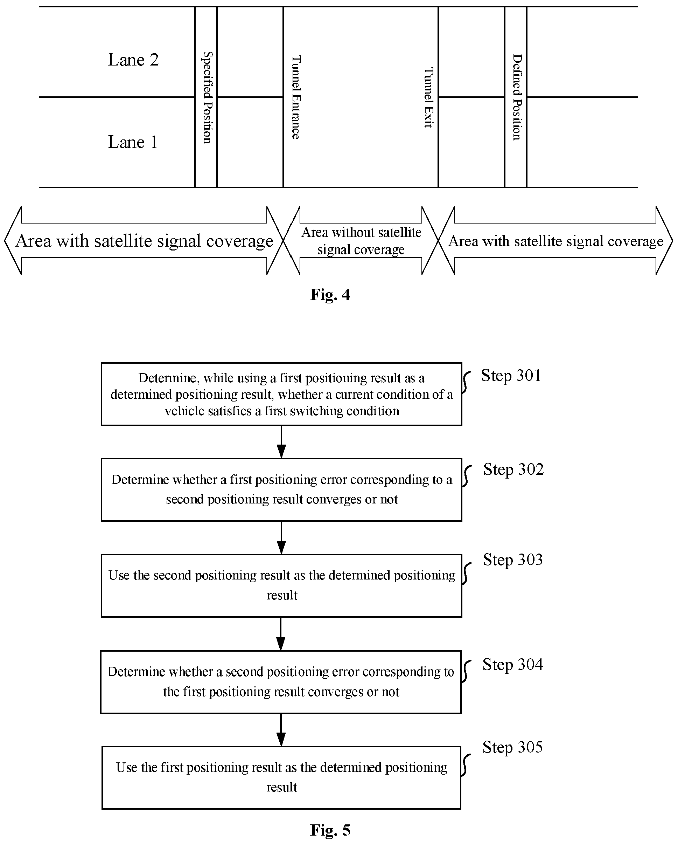

In this embodiment, a schematic diagram of a positional relationship between the tunnel, the specified position, and the defined position is shown in Fig. 4. In Fig. 4, two lanes are shown, denoted as Lane 1 and Lane 2, respectively. It can be understood that there is no satellite signal coverage (i.e., low satellite signal quality) in the tunnel from the tunnel entrance to the tunnel exit, and areas other than the tunnel are in coverage of satellite signals (i.e., high satellite signal quality).

Referring to the schematic diagram of the positional relationship provided in Fig. 4, an embodiment of the present disclosure provides a positioning method. The flow of the method is shown in Fig. 5, including the following steps.

At step 301, while using a first positioning result as a determined positioning result, it is determined whether a current condition of a vehicle satisfies a first switching condition.

Since the vehicle is initially moving in the area with high satellite signal quality, in this step, while using the first positioning result as the determined positioning result, it can be determined whether the current condition of the vehicle satisfies the first switching condition. That is, based on a GPS positioning result in combination with a pre-loaded high-precision GPS map, it can be determined whether the vehicle arrives at a specified position predetermined on the high-precision GPS map.

Of course, in a possible implementation, it is also possible to determine whether the current condition of the vehicle satisfies the first switching condition based on whether a satellite signal quality is lower than a specified value. In another possible implementation, it is also possible to determine whether the current condition of the vehicle satisfies the first switching condition based on whether the satellite signal quality is lower than the specified value and whether the vehicle arrives at the specified position predetermined on the high-precision GPS map.

In this embodiment, the following description will be given with reference to an example where it is determined whether the current condition of the vehicle satisfies the first switching condition based on whether the vehicle arrives at the specified position predetermined on the high-precision GPS map.

When it is determined that the vehicle arrives at the specified position predetermined on the high-precision GPS map, the method proceeds with step 302.

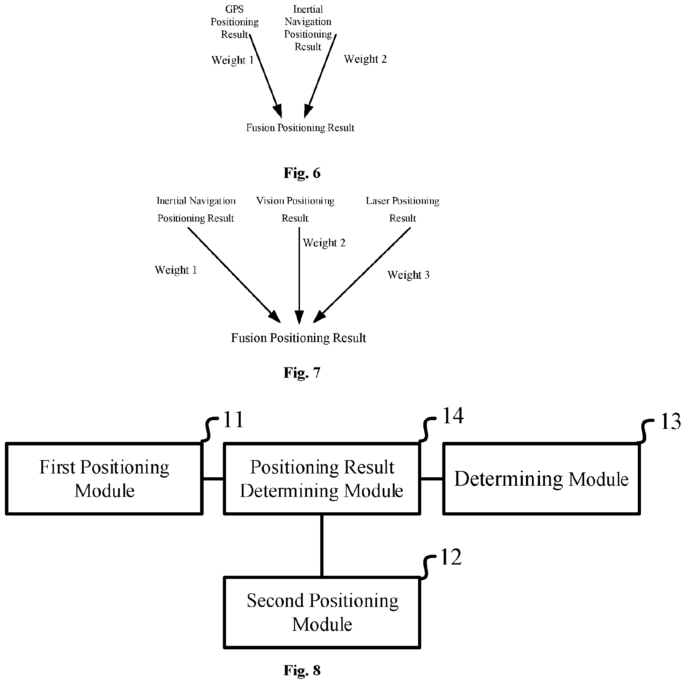

In this embodiment, the first positioning algorithm is used to position the vehicle based on positioning data collected by a GPS receiver and an inertial navigation sensor to obtain a first positioning result. A schematic diagram of a fusion process for the first positioning algorithm is shown in Fig. 6. Here, two positioning results of the vehicle as obtained based on two sensors (i.e., a GPS receiver and an inertial navigation sensor) respectively, i.e., the GPS positioning result and the inertial navigation positioning result, can be weighted with their respective fusion weights (denoted as Weight 1 and Weight 2 respectively), to obtain a comprehensively weighted average fusion positioning result.

At step 302, it is determined whether a first positioning error corresponding to a second positioning result converges or not.

In this step, when it is determined that the current condition of the vehicle satisfies the first switching condition, the second positioning result can be started to be obtained. That is, the second positioning result can be obtained by positioning the vehicle using a second positioning algorithm based on positioning data collected by an inertial navigation sensor, a vision sensor, and a laser sensor.

Since the second positioning result is started to be obtained from the time at which it is determined that the current condition of the vehicle satisfies the first switching condition, and it will takes a period of time to obtain an accurate first positioning error. Therefore, in this step, it can be determined whether the first positioning error converges or not within a defined time length.

When it is determined that the first positioning error converges within the defined time length, the method proceeds with step 303, or otherwise this process can be terminated.

In this embodiment, the second positioning algorithm is used to position the vehicle based on the positioning data collected by the inertial navigation sensor, the vision sensor, and the laser sensor to obtain the second positioning result. A schematic diagram of a fusion process of the second positioning algorithm is shown in Fig. 7. Here, three positioning results of the vehicle as obtained based on three sensors (i.e., an inertial navigation sensor, a vision sensor, and a laser sensor) respectively, i.e., an inertial navigation positioning result, a vision positioning result, and a laser positioning result, can be weighted with their respective fusion weights (denoted as Weights 1~3), to obtain a comprehensively weighted average fusion positioning result.

At step 303, the second positioning result is used as the determined positioning result.

Since it is determined that the first positioning error converges within the defined time length, it can be considered that the positioning accuracy of the second positioning result can meet the requirement. In this step, the second positioning result can be used as the positioning result of the vehicle.

It is to be noted that while using the second positioning result as the positioning result of the vehicle, it may be further determined whether the current condition of the vehicle satisfies a second switching condition.

In this embodiment, based on the GPS positioning result in combination with the pre-loaded high-precision GPS map, it can be determined whether the vehicle arrives at a defined position on the high-precision GPS map.

Of course, in a possible implementation, it can also be determined whether the current condition of the vehicle satisfies the second switching condition based on whether the satellite signal quality is higher than a defined value. In another possible implementation, it can also be determined whether the current condition of the vehicle satisfies the second switching condition based on whether the satellite signal quality is higher than the defined value and whether the vehicle arrives at the defined position on the high-precision GPS map.

In this embodiment, the following description will be given with reference to an example where it is determined whether the current condition of the vehicle satisfies the second switching condition based on whether the vehicle arrives at the defined position on the high-precision GPS map.

When it is determined that the vehicle arrives at the defined position on the high-precision GPS map, the method proceeds with step 304.

At step 304, it is determined whether a second positioning error corresponding to the first positioning result converges or not.

In this embodiment, since the first positioning result is continuously obtained while obtaining the second positioning result, when it is determined that the current condition of the vehicle satisfies the second switching condition, it can be determined whether the second positioning error converges or not at a current time point.

When it is determined that the second positioning error converges at the current time point, the method proceeds with step 305, or otherwise, this process can be terminated.

At step 305, the first positioning result is used as the determined positioning result.

Since it is determined that the second positioning error converges at the current time point, it can be considered that the positioning accuracy of the first positioning result can meet the requirement. In this step, the first positioning result can be used as the positioning result of the vehicle.

While using the first positioning result as the positioning result of the vehicle, the second positioning algorithm may not be used to obtain the second positioning result, so as to save system resources.

With the solution according to the above embodiment, the switching condition can be set by marking on the high-precision GPS map. In the process of vehicle positioning, it is possible to avoid using an inaccurate data source for vehicle positioning, so as to improve the accuracy of vehicle positioning in case of switching between positioning scenarios.

With the solution according to the above embodiment, it is possible to add a positioning data source with higher positioning accuracy and remove a positioning data source with low positioning accuracy during the process of the autonomous vehicles entering and exiting the tunnel, thereby effectively improving the positioning accuracy. In addition, by accurately setting the specified position and the defined position, the problem of unstable positioning results due to switching between the positioning data sources at the exit and entrance of the tunnel can also be solved.

Corresponding to the above method, an apparatus is further provided as follows.

An embodiment of the present disclosure provides a positioning apparatus. The apparatus may have a structure shown in Fig. 8, including a first positioning module 11, a second positioning module 12, a determining module 13, and a positioning result determining module 14, wherein:

The first positioning module 11 is configured to position a movable object by using a first positioning algorithm based on positioning data collected by at least one first sensor to obtain a first positioning result. The second positioning module 12 is configured to position the movable object by using a second positioning algorithm based on positioning data collected by at least one second sensor to obtain a second positioning result. The determining module 13 is configured to determine, while using one of the first positioning result and the second positioning result as a determined positioning result, whether a current condition of the movable object satisfies a predetermined switching condition. The positioning result determining module 14 is configured to use the other one of the first positioning result and the second positioning result as the determined positioning result when the determining module 13 determines that the current condition of the movable object satisfies the predetermined switching condition.

In a possible implementation, the at least one first sensor may include a satellite positioning system receiver and an inertial navigation sensor. The at least one second sensor may include no satellite positioning system receiver, and the at least one second sensor may include a vision sensor, a laser sensor, and an inertial navigation sensor.

Further, in a possible implementation, the first positioning module 11 may be configured to position the movable object based on a satellite signal collected by the satellite positioning system receiver to obtain a satellite positioning result; position the movable object based on acceleration data collected by the inertial navigation sensor to obtain an inertial navigation positioning result; and perform weighted filtering and fusion on the satellite positioning result and the inertial navigation positioning result to generate the first positioning result.

In a possible implementation, the second positioning module 12 may be configured to position the movable object based on image data collected by the vision sensor to obtain a vision positioning result; position the movable object based on point cloud data collected by the laser sensor to obtain a laser positioning result; position the movable object based on acceleration data collected by the inertial navigation sensor to obtain an inertial navigation positioning result; and perform weighted filtering and fusion on the inertial navigation positioning result, the vision positioning result, and the laser positioning result to generate the second positioning result.

In a possible implementation, the predetermined switching condition may include a first switching condition, and the first switching condition may be a combination of one or more of: satellite signal quality obtained by the movable object being lower than a specified value, and the movable object arriving at a specified position on a pre-loaded map.

In this case, the determining module 13 may be configured to determine, while using the first positioning result as the determined positioning result, whether the current condition of the movable object satisfies the first switching condition.

The positioning result determining module 14 may be configured to use the second positioning result as the determined positioning result when determining that the current condition of the movable object satisfies the first switching condition.

Further, the positioning result determining module 14 may be configured to determine, when determining that the current condition of the movable object satisfies the first switching condition, whether a first positioning error corresponding to the second positioning result converges or not; and use the second positioning result as the determined positioning result when determining that the first positioning error converges.

Furthermore, the positioning result determining module 14 may be configured to: determine, when determining that the current condition of the movable object satisfies the first switching condition, whether the first positioning error converges or not at a current time point; or determine, when determining that the current condition of the movable object satisfies the first switching condition, whether the first positioning error converges or not within a defined time length.

In another possible implementation, the predetermined switching condition may include a second switching condition, and the second switching condition may be a combination of one or more of: satellite signal quality obtained by the movable object being higher than a defined value, and the movable object arriving at a defined position on a pre-loaded map.

In this case, the determining module 13 may be configured to determine, while using the second positioning result as the determined positioning result, whether the current condition of the movable object satisfies the second switching condition.

The positioning result determining module 14 may be configured to use the first positioning result as the determined positioning result when determining that the current condition of the movable object satisfies the second switching condition.

Further, the positioning result determining module 14 may be configured to determine, when determining that the current condition of the movable object satisfies the second switching condition, whether a second positioning error corresponding to the first positioning result converges or not; and use the first positioning result as the determined positioning result when determining that the second positioning error converges.

Furthermore, the positioning result determining module 14 may be configured to: determine, when determining that the current condition of the movable object satisfies the second switching condition, whether the second positioning error converges or not at a current time point; or determine, when determining that the current condition of the movable object satisfies the second switching condition, whether the second positioning error converges or not within a defined time length.

The functions of the respective functional units of the apparatus according to the above embodiment of the present disclosure can be achieved by the steps of the above corresponding method. Therefore, the details of the operation processes and advantageous effects of the respective functional units in the apparatus according to the embodiment of the present disclosure will be omitted here.

Based on the same inventive concept, the embodiments of the present disclosure provide the following device and medium.

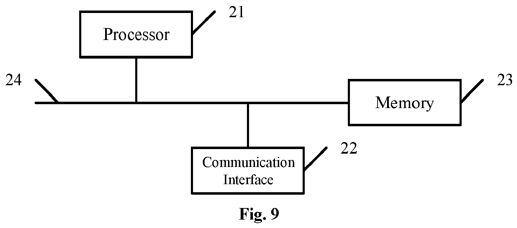

An embodiment of the present disclosure provides a positioning device. The device may have a structure as shown in Fig. 9, including a processor 21, a communication interface 22, a memory 23, and a communication bus 24. The processor 21, the communication interface 22, and the memory 23 communicate with each other via the communication bus 24.

The memory 23 is configured to store a computer program.

The processor 21 is configured to implement, when executing the program stored on the memory 23, the method according to the above method embodiment of the present disclosure.

Optionally, the processor 21 may specifically include a Central Processing Unit (CPU), an Application Specific Integrated Circuit (ASIC), one or more integrated circuits for controlling program execution, a hardware circuit developed by Field Programmable Gate Array (FPGA), or a baseband processor.

Optionally, the processor 21 may include at least one processing core.

Optionally, the memory 23 may include a Read-Only Memory (ROM), a Random Access Memory (RAM), and a disk memory. The memory 23 is configured to store data required by the at least one processor 21 during operation. The number of memories 33 may be one or more.

An embodiment of the present disclosure provides a non-volatile computer storage medium storing an executable program which, when executed by a processor, implements the method according to the above method embodiment of the present disclosure.

In a specific implementation process, the computer storage medium may include: a Universal Serial Bus (USB) Flash Drive, a mobile hard disk, a Read-Only Memory (ROM), a Random Access Memory (RAM), a magnetic disk, an optical disc, or other storage medium capable of storing program codes.

In the embodiments of the present disclosure, it can be appreciated that the disclosed devices and methods may be implemented in other ways. For example, the device embodiments described above are illustrative only. For example, the units or divisions thereof are only divisions based on logical functions. There may be other divisions in actual implementations. For example, more than one unit or component may be combined or integrated into another system, or some features can be ignored or omitted. In addition, the mutual coupling or direct coupling or communicative connection as shown or discussed may be indirect coupling or communicative connection between devices or units via some interfaces which may be electrical or in any other forms.

The functional units in the embodiments of the present disclosure may be integrated into one processing unit, or alternatively be separate physical modules.

When the integrated unit is implemented in the form of a software functional unit and sold or used as a standalone product, it can be stored in a computer readable storage medium. Based on this understanding, all or part of the technical solutions according to the embodiments of the present disclosure can be embodied in the form of a software product. The computer software product may be stored in a storage medium and contain instructions to enable a computer device, such as a personal computer, a server, or a network device, etc., or a processor to perform all or part of the steps of the method described in each of the embodiments of the present disclosure. The storage medium may include a Universal Serial Bus Flash Drive, a mobile hard disk, a ROM, a RAM, a magnetic disk, an optical disc, or any other medium capable of storing program codes.

It can be appreciated by those skilled in the art that the embodiments of the present disclosure can be implemented as a method, a system or a computer program product. The present disclosure may include pure hardware embodiments, pure software embodiments and any combination thereof. Also, the present disclosure may include a computer program product implemented on one or more computer readable storage mediums (including, but not limited to, magnetic disk storage, CD-ROM, and optical storage) containing computer readable program codes.

The present disclosure has been described with reference to the flowcharts and/or block diagrams of the method, device (system) and computer program product according to the embodiments of the present disclosure. It can be appreciated that each process and/or block in the flowcharts and/or block diagrams, or any combination thereof, can be implemented by computer program instructions. Such computer program instructions can be provided to a general computer, a dedicated computer, an embedded processor or a processor of any other programmable data processing device to constitute a machine, such that the instructions executed by a processor of a computer or any other programmable data processing device can constitute means for implementing the functions specified by one or more processes in the flowcharts and/or one or more blocks in the block diagrams.

These computer program instructions can also be stored in a computer readable memory that can direct a computer or any other programmable data processing device to operate in a particular way. Thus, the instructions stored in the computer readable memory constitute a manufacture including instruction means for implementing the functions specified by one or more processes in the flowcharts and/or one or more blocks in the block diagrams.

These computer program instructions can also be loaded onto a computer or any other programmable data processing device, such that the computer or the programmable data processing device can perform a series of operations/steps to achieve a computer-implemented process. In this way, the instructions executed on the computer or the programmable data processing device can provide steps for implementing the functions specified by one or more processes in the flowcharts and/or one or more blocks in the block diagrams.

While the preferred embodiments of the present disclosure have described above, further alternatives and modifications can be made to these embodiments by those skilled in the art in light of the basic inventive concept of the present disclosure. The claims as attached are intended to cover the preferred embodiments and all these alternatives and modifications that fall within the scope of the present disclosure.

Obviously, various modifications and variants can be made to the present disclosure by those skilled in the art without departing from the spirit and scope of the present disclosure. Therefore, these modifications and variants are to be encompassed by the present disclosure if they fall within the scope of the present disclosure as defined by the claims and their equivalents.

## Claims

1. A positioning method, comprising:
positioning a movable object by using a first positioning algorithm based on positioning data collected by at least one first sensor to obtain a first positioning result;
positioning the movable object by using a second positioning algorithm based on positioning data collected by at least one second sensor to obtain a second positioning result;
selecting one of the first positioning result and the second positioning result as a target positioning result, whether a current condition of the movable object satisfies a predetermined switching condition; and
selecting another one of the first positioning result and the second positioning result as the target positioning result when determining that the current condition of the movable object satisfies the predetermined switching condition.

2. The method of claim 1, wherein the at least one first sensor comprises at least one of a satellite positioning system receiver and an inertial navigation sensor, the at least one second sensor has at least one different sensor from the at least one first sensor, and the at least one second sensor comprises at least one of a vision sensor, a laser sensor, and an inertial navigation sensor.

3. The method of claim 2, wherein said positioning the movable object by using the first positioning algorithm based on the positioning data collected by the at least one first sensor to obtain the first positioning result comprises:
positioning the movable object based on a satellite signal collected by the satellite positioning system receiver to obtain a satellite positioning result;
positioning the movable object based on acceleration data collected by the inertial navigation sensor to obtain an inertial navigation positioning result; and
performing weighted filtering and fusion on the satellite positioning result and the inertial navigation positioning result to generate the first positioning result.

4. The method of claim 2 or 3, wherein said positioning the movable object by using the second positioning algorithm based on the positioning data collected by the at least one second sensor to obtain the second positioning result comprises:
positioning the movable object based on image data collected by the vision sensor to obtain a vision positioning result;
positioning the movable object based on point cloud data collected by the laser sensor to obtain a laser positioning result;
positioning the movable object based on acceleration data collected by the inertial navigation sensor to obtain an inertial navigation positioning result; and
performing weighted filtering and fusion on the inertial navigation positioning result, the vision positioning result, and the laser positioning result to generate the second positioning result.

5. The method of any of claims 2-4, wherein the predetermined switching condition comprises a first switching condition, and the first switching condition is a combination of one or more of:
satellite signal quality obtained by the movable object being lower than a specified value, and
the movable object arriving at a specified position on a pre-loaded map.

6. The method of any of claims 5, wherein said selecting the one of the first positioning result and the second positioning result as the target positioning result comprises:
determining, while the first positioning result is selected as the determined positioning result, whether the current condition of the movable object satisfies the first switching condition, and
said selecting another one of the first positioning result and the second positioning result as the target positioning result when determining that the current condition of the movable object satisfies the predetermined switching condition comprises:
selecting the second positioning result as the target positioning result when determining that the current condition of the movable object satisfies the first switching condition.

7. The method of claim 6, wherein said selecting the second positioning result as the target positioning result when determining that the current condition of the movable object satisfies the first switching condition comprises:
determining, when the current condition of the movable object satisfies the first switching condition, whether a first positioning error corresponding to the second positioning result converges or not; and
selecting the second positioning result as the target positioning result when determining that the first positioning error converges.

8. The method of claim 7, wherein said determining, when the current condition of the movable object satisfies the first switching condition, whether the first positioning error converges or not comprises:
determining, when the current condition of the movable object satisfies the first switching condition, whether the first positioning error converges or not at a current time point; or
determining, when the current condition of the movable object satisfies the first switching condition, whether the first positioning error converges or not within a defined time length.

9. The method of any of claims 2-8, wherein the predetermined switching condition comprises a second switching condition, and the second switching condition is a combination of one or more of:
satellite signal quality obtained by the movable object being higher than a defined value, and
the movable object arriving at a defined position on a pre-loaded map.

10. The method of any of claims 9, wherein said selecting the one of the first positioning result and the second positioning result as the target positioning result, whether the current condition of the movable object satisfies the predetermined switching condition comprises:
determining, while the second positioning result is selected as the determined positioning result, whether the current condition of the movable object satisfies the second switching condition, and
said selecting another one of the first positioning result and the second positioning result as the target positioning result when determining that the current condition of the movable object satisfies the predetermined switching condition comprises:
selecting the first positioning result as the determined positioning result when determining that the current condition of the movable object satisfies the second switching condition.

11. The method of claim 10, wherein said selecting the first positioning result as the target positioning result when determining that the current condition of the movable object satisfies the second switching condition comprises:
determining, when the current condition of the movable object satisfies the second switching condition, whether a second positioning error corresponding to the first positioning result converges or not; and
selecting the first positioning result as the target positioning result when determining that the second positioning error converges.

12. The method of claim 11, wherein said determining, when the current condition of the movable object satisfies the second switching condition, whether the second positioning error converges or not comprises:
determining, when the current condition of the movable object satisfies the second switching condition, whether the second positioning error converges or not at a current time point; or
determining, when the current condition of the movable object satisfies the second switching condition, whether the second positioning error converges or not within a defined time length.

13. A computer readable storage medium comprising instructions which, when executed by a computer, cause the computer to carry out the method according to any of claims 1-12.

14. A positioning device, comprising a processor, a communication interface, a memory, and a communication bus, wherein the processor, the communication interface, and the memory communicate with each other via the communication bus,
the memory is configured to store a computer program, and
the processor is configured to implement, when executing the program stored on the memory, the method according to any of claims 1-12

15. A computer program product comprising instructions which, when the program is executed by a computer, cause the computer to carry out the method according to any of claims 1-12.
